(19) Europäisches Patentamt
European Patent Office
Office européen des brevets

(11) Veröffentlichungsnummer: **0 088 887**
**B1**

(12) **EUROPÄISCHE PATENTSCHRIFT**

(45) Veröffentlichungstag der Patentschrift:
**29.01.86**

(51) Int. Cl.⁴: **A 01 N 39/04,** A 01 N 39/02,
A 01 N 25/04

(21) Anmeldenummer: **83101235.6**

(22) Anmeldetag: **09.02.83**

(54) **Lagerstabile, konzentrierte Emulsion von herbizid wirkenden Phenoxyalkancarbonsäureestern und ein Verfahren zu deren Herstellung.**

(30) Priorität: **03.03.82 DE 3207661**

(43) Veröffentlichungstag der Anmeldung:
**21.09.83 Patentblatt 83/38**

(45) Bekanntmachung des Hinweises auf die Patenterteilung:
**29.01.86 Patentblatt 86/5**

(84) Benannte Vertragsstaaten:
**AT BE CH DE FR IT LI LU NL SE**

(56) Entgegenhaltungen:
**FR - A - 2 171 239**

(73) Patentinhaber: **CHEMIE LINZ AKTIENGESELLSCHAFT, St. Peter-Strasse 25, A-4020 Linz (AT)**

(84) Benannte Vertragsstaaten: **BE CH FR IT LI LU NL SE AT**

(73) Patentinhaber: **Lentia Gesellschaft mit beschränkter Haftung, Arabellastrasse 4 Postfach 81 05 08, D-8000 München 81 (DE)**

(84) Benannte Vertragsstaaten: **DE**

(72) Erfinder: **Leitner, Harald, Dr., Kirchstetten 19, A-4064 Oftering (AT)**
Erfinder: **Leiss, Kurt, Franckstrasse 7c, A-4020 Linz (AT)**

## Beschreibung

Die Erfindung betrifft eine lagerstabile, konzentrierte Emulsion von einem oder mehreren herbizid wirkenden Phenoxyalkancarbonsäureestern auf wässriger Basis sowie ein Verfahren zu deren Herstellung.

Phenoxyalkancarbonsäuren gehören zu den gebräuchlichsten Herbiziden. Sie werden in Form ihrer Aminsalze, Mineralsalze oder auch als Ester, wie z.B. Isopropyl-, Butyl-, Butylglycol- oder 2-Äthylhexylester angewendet. Der Vorteil der Ester besteht darin, dass sie schneller in die Pflanze eindringen und daher ihre Anwendung weniger witterungsabhängig ist. Ihre Löslichkeit in Wasser ist gering, sie sind jedoch in Ölen, wie Dieselöl, Kerosin, Petroläther, Xylolen, Cyclohexanon, Isophoron oder hochraffinierte Kohlenwasserstoffen löslich. Üblicherweise wird der Ester in einem solchen Lösungsmittel gelöst, die Lösung mit einem Emulgator versetzt, wodurch eine konzentrierte, klare, emulgierbare Lösung (Emulsionskonzentrat, EC) entsteht, die zur Anwendung auf dem Feld mit Wasser verdünnt wird, wodurch eine Öl-in-Wasser-Emulsion entsteht.

Laut AT-PS 307 802 ist es auch möglich, zur Lagerung von Pestiziden eine hochviskose Formulierung, bestehend aus Wirkstoff, Mineralöl, Wasser und Formulierungshilfsmitteln, vom Typ Öl-in-Wasser herzustellen, die für die Applikation kurz vor dem Gebrauch durch einen Zusatz, bestehend aus Lösungsmittel und Dispergator zu einer leicht flüssigen Wasser-in-Öl-Dispersion invertiert wird: «Inverse Emulsion».

Beide Formulierungsarten, das üblicherweise verwendete Emulsionskonzentrat und die hochviskose Dispersion, besitzen jedoch schwerwiegende Nachteile, deren Ursachen von dem verwendeten Lösungsmittel herrühren. Alle hierfür üblicherweise verwendeten Lösungsmittel sind wie die meisten organischen Lösungsmittel zumindest gesundheitsschädlich, aber vor allem brennbar. So haben hochgereinigte, hauptsächlich aliphatische Kohlenwasserstoffe einen Flammpunkt von 40 bis 80°C, Isophoron hat einen Flammpunkt von 93°C, Cyclohexanon einen Flammpunkt von 44°C und die am häufigsten verwendeten Xylole einen Flammpunkt von nur ca. 25°C.

Damit sind auch die mit Hilfe dieser Lösungsmittel hergestellten Emulsionskonzentrate brennbar, und es ist in der Vergangenheit schon mehrfach zu Lagerbränden sowohl beim Hersteller als auch beim Anwender gekommen.

Demgegenüber konnte gefunden werden, dass es unter Verwendung bestimmter Hilfsmittel möglich ist, eine lagerstabile, hochkonzentrierte Emulsion von Herbizidestern herzustellen, die auf wässriger Basis aufgebaut ist, und daher nicht brennbar und vom Lösungsmittel her nicht gesundheitsschädlich ist. Die Möglichkeit der Verwendung eines wässrigen Mediums zur Herstellung von lagerstabilen Emulsionen von Phenoxyestern ist überraschend, da Phenoxyester an sich in Wasser zu einem, wenn auch geringen Teil löslich sind und daher verseift werden können.

Gegenstand der vorliegenden Erfindung ist demnach eine lagerstabile, konzentrierte Emulsion von einem oder mehreren herbizid wirkenden Phenoxyalkancarbonsäureestern auf wässriger Basis unter Verwendung eines öllöslichen Emulgators und eines wasserlöslichen Dispergators, dadurch gekennzeichnet, dass sie einen oder mehrere in den Estern löslichen Emulgatoren in einer Menge von 0,1 bis 5 Gew.-%, bezogen auf die fertige Emulsion, mit einem HLB-Wert von 9 bis 16 aus der Gruppe der Fettsäurepolyäthylenglycolester, der Polyäthylenglycoläther von Fettalkoholen, von Glyceriden oder von Alkylphenolen, Polyoxyäthylen- und Polyoxypropylenblockpolymere, Mischungen dieser Polyäthylenglycolester, Polyäthylenglycoläther oder Polyäthylenglycol-polypropylenglycol-Blockpolymeren mit Alkylarylsulfonaten sowie einen oder mehrere wasserlösliche Dispergatoren in einer Menge von 0,1 bis 3 Gew.-%, bezogen auf die fertige Emulsion, aus der Gruppe der Alkalisalze von gesättigten oder ein- oder mehrfach ungesättigten Fettsäuretauriden oder Fettsäurealkyltauriden gegebenenfalls zusammen mit üblichen Kälteschutz- und/oder üblichen Antischäummitteln enthält, wobei der Wirkstoffgehalt der konzentrierten Emulsion 30 bis 75 Gew.-%, die Viskosität 50 bis 3000 mPa.s, die Tropfengrösse 1 bis 5 μm und der pH-Wert 6 bis 9 beträgt.

Die erfindungsgemässe, hochkonzentrierte Emulsion wird durch Vermischen der einzelnen Reaktionspartner oder durch Vermischen von 2 Lösungen hergestellt: Lösung I enthält den oder die Phenoxyester und einen in den Estern löslichen Emulgator, Lösung II enthält einen in Wasser gelösten Dispergator sowie gegebenenfalls Frostschutzmittel, Verdickungsmittel, Entschäumungsmittel oder Farbstoffe.

Die in den Phenoxyestern löslichen, also fettlöslichen Emulgatoren, bewirken die Verteilung des Wirkstoffes in der äusseren Phase. Solche Emulgatoren mit einem HLB-Wert (''hydrophil - lipophil - balance'') von 9 bis 16 sind: Fettsäurepolyäthylenglycolester, die Polyäthylenglycoläther von Fettalkoholen, von Mono- oder Diglyceriden und von Alkylphenolen, weiters Polyäthylenglycol-polypropylenglycol-Blockpolymere. Die Emulgatoren können allein, in Mischung untereinander oder in Mischung mit Ammonium-, Ca-, Mg-, K-, Na- und Zn-Salzen von Alkyl($C_8$-$C_{24}$)benzolsulfonsäuren verwendet werden. Besonders geeignet sind Fettsäurepolyäthylenglycolester oder Polyoxyäthylen-Polyoxypropylenblockpolymere zusammen mit Alkylarylsulfonaten.

In der Lösung I liegen die fettlöslichen Emulgatoren in einer Konzentration von 0,15 bis 10 Gew.-Teilen pro 100 Teile der Lösung I vor, wobei der Bereich von 2 bis 4 Gew.-Teilen besonders bevorzugt ist. In der konzentrierten, lagerfähigen Emulsion liegen die Emulgatoren in einer Menge von 0,1 bis 5 Gew.-%, insbesondere in einer solchen von 1 bis 3 Gew.-% vor.

Der wasserlösliche Dispergator stabilisiert die Verteilung der inneren Phase, z.B. durch elektrostatische Aufladung der Teilchen oder durch andere, eine Abstossung hervorrufende Kräfte, wie z.B. sterische Hinderung. Als Dispergator dienen die Alkalisalze, insbesondere die Natriumsalze von Fettsäuretauriden oder Fettsäurealkyltauriden. Beispiele für solche Fettsäuren, die häufig auch in Mischungen vorliegen,

sind geradkettige oder verzweigte gesättigte oder ein- oder mehrfach ungesättigte aliphatische Carbonsäuren mit etwa 10 bis 20 Kohlenstoffatomen, wie Laurinsäure, Palmitinsäure, Stearinsäure, Myristinsäure und insbesondere Ölsäure. Der Alkylrest in Fettsäurealkyltauriden ist ein niederer Alkylrest mit bis zu 4 C-Atomen, insbesondere der Methylrest.

Die Dispergatoren können anorganische Salze enthalten, wobei es zweckmässig ist, den Salzgehalt niedrig zu halten oder ganz zu vermeiden.

In der Lösung II liegt der wasserlösliche Dispergator üblicherweise in einer Konzentration von 0,2 bis 10 Gew.-Teilen vor, wobei der Bereich von 1 bis 3 Gew.-Teilen pro 100 Teile Lösung II besonders bevorzugt ist. Die Dispergatorkonzentration in der konzentrierten, lagerfähigen Emulsion beträgt meist 0,1 bis 3 Gew.-%, vorzugsweise 0,2 bis 1 Gew.-%.

Die Herstellung der lagerstabilen Emulsionen erfolgt gewöhnlich so, dass eine wässrige Lösung II eines Dispergators, die gegebenenfalls Frostschutzmittel, Entschäummittel oder Verdickungsmittel enthält, vorgelegt wird, und der oder die flüssigen Phenoxyester, welche den Emulgator gelöst enthalten, als Lösung I eingerührt werden, sodass eine homogene Mischung entsteht. Dieses Einrühren erfolgt mit Geräten, die in der Emulsion ein Schergeschwindigkeitsgefälle zwischen $10^2$ und $10^4$ sec$^{-1}$ erzeugen. Dies entspricht bei hoher Viskosität (3000 mPa.s) Schubspannungen von $3.10^2$ bis $3.10^4$ Pa, wofür sich Geräte wie Homorex®, Ultra-Turrax® oder Homogenisierungsgeräte mit Homogenisierkopf eignen. Bei niedriger Viskosität (50 mPa.s) entspricht dies Schubspannungen von 5 bis 500 Pa, wofür sich Geräte wie Vibratoren, niedertourige Mixer, Kreiselpumpen und ähnliche Geräte eignen. Da die Viskosität mit höherer Temperatur abnimmt, ist es möglich, bei Anwendung höherer Temperatur, etwa von 50 bis 90°C auch niedertourige Geräte zu verwenden. Dabei soll eine homogene Tropfenverteilung mit Tropfengrössen von 1 bis 5 μm, vorzugsweise von 2 bis 3 μm, entstehen, wobei aber neben der Grösse der einzelnen Tropfen auch deren möglichst enge Verteilung bei gleichzeitig niederer Viskosität der Emulsion von Bedeutung ist. Es ist auch möglich, beide Lösungen in einen Rührbehälter zu geben und anschliessend zu vermischen oder sie gleichzeitig über geeignete Dosiergeräte einzubringen.

Die Viskosität der konzentrierten Emulsion ist ein wesentlicher Faktor für die Lagerstabilität. Je höher die Viskosität, umso besser ist die Lagerstabilität, andererseits ist eine zu hohe Viskosität jedoch ungünstig für die Verdünnbarkeit mit Wasser und die Spontandispergierbarkeit bei der Anwendung. Mit Hilfe der erfindungsgemäss hergestellten konzentrierten Emulsion ist es möglich, in einem Viskositätsbereich von 50 bis 3000 mPa.s stabile und zugleich noch leicht verdünnbare Zubereitungen herzustellen. Die besten Ergebnisse bezüglich Verdünnbarkeit und Spontandispergierbarkeit einerseits und Stabilität andererseits werden bei Viskositäten zwischen 500 und 1500 mPa.s erhalten.

Wesentlich für die Herstellung einer stabilen Emulsion ist weiters auch die Einstellung des pH-Wertes. Für jede Kombination von Wirkstoff/Emulgator/Dispergator gibt es einen optimalen pH-Wert, bei dem die Emulsion am stabilsten ist. Diese physikalische Stabilität ist im alkalischen Bereich am besten, doch sind pH-Werte von über 9 zu vermeiden, da in diesem Bereich bei langer Lagerung und erhöhter Temperatur eventuell bereits eine partielle Verseifung des Esters beginnen könnte. Im sauren Medium sind pH-Werte von unter 6 zu vermeiden, da es in diesem Bereich nach längerer Lagerzeit zu Koaleszenz kommen kann, die Emulsion also zunehmend physikalisch instabil wird. Bevorzugt ist ein pH-Bereich von 7 bis 8.

Zur Herstellung des erfindungsgemässen Mittels eignen sich alle herbizid wirksamen Phenoxyalkancarbonsäureester allein oder als Gemische untereinander, insbesondere die Ester mit einer Alkoholkettenlänge von $C_4 - C_8$, wie z.B. die Octylester der CMPP-, MCPA- oder 2,4,5-T-Säuren.

Da technische Phenoxyalkancarbonsäureester aufgrund ihres Herstellungsverfahrens üblicherweise einen pH-Wert von etwa 3 (gemessen als 10%ige wässrige Dispersion) aufweisen, wird der gewünschte pH mit Hilfe einer üblichen Lauge, wie z.B. NaOH oder KOH eingestellt. Die Einstellung des gewünschten pH-Wertes kann während oder nach Herstellung der Emulsion erfolgen, es ist jedoch auch möglich, gereinigte, «neutrale» Ester zu verwenden, wodurch sich das Nachstellen des pH-Wertes erübrigt.

Um eine ausreichende Kältestabilität zu gewährleisten, können den Emulsionen die üblichen Frostschutzmittel, wie Äthylenglycol, Glycerin, Harnstoff, Glycoläther oder andere Alkohole zugesetzt werden. Weiters ist es möglich, bekannte anorganische oder organische Verdickungsmittel, wie z.B. Xanthangummi, Natriumpolyacrylat, Carboxymethylcellulose, kolloidale Kieselsäure oder quellende Tonmineralien, wie Bentonit, zuzusetzen, um eine bestimmte Viskosität einzustellen. Zur Verminderung der Schaumbildung können Entschäummittel, wie langkettige Alkohole, 2-Äthylhexanol oder Cetylalkohol, hochpolymere Glycole und vor allem Silikone beigefügt werden.

Zur Anwendung auf dem Feld werden die erfindungsgemäss hergestellten, konzentrierten Emulsionen genau wie die bisher üblichen brennbaren Emulsionskonzentrate mit Wasser verdünnt und können mit den selben Spritzgeräten appliziert werden.

Die folgenden Beispiele beschreiben die Herstellung sowie die chemische und physikalische Stabilität der erfindungsgemässen Mittel. Die verwendeten technischen Phenoxyalkancarbonsäureester entsprechen den von der WHO empfohlenen Richtlinien. Die Stabilität wurde in einem Lagerversuch überprüft, bei dem ein 24-Stunden-Temperaturwechsel zwischen —10°C und +50°C eingehalten wurde. Nach einer Lagerung über einen Zeitraum von 4 Wochen wurde gemessen:

1. Änderung des pH-Wertes
2. Verbrauch von 0,01 n NaOH Lösung, um den Anfangs-pH wieder herzustellen
3. Viskositätsänderung (gemessen am Brookfield-LVT-Viskosimeter, Spindel 2, 6 rpm)
4. Änderung des Trübungswertes einer 0,01%igen Emulsion, korreliert mit der Veränderung der Tropfengrösse (gemessen mit einem Lange-Trübungsmesser in 100 ml-Küvetten)

5. Überstehende Flüssigkeit in %
6. Koaleszenz (Entstehen einer öligen Phase)
7. Reemulgierbarkeit.

Die zu den Beispielen gehörenden Messergebnisse wurden in einer Tabelle zusammengefasst. Aus den Messergebnissen geht hervor, dass in keinem der angeführten Beispiele nach einer Lagerzeit von 4 Wochen bei einem 24-Stunden-Temperaturwechsel zwischen —10°C und +50°C die Änderungen in den Punkten 1., 2., 3., 4. und 5. mehr als 10% betrugen. Es trat keine Koaleszenz auf und ein eventuell vorhandener, nicht koaleszierter Bodensatz war vollständig reemulgierbar.

### Beispiel 1

| Lösung I: | 640 | g | 2,4,5-T-Amylester techn. |
| | 20 | g | Fettsäurepolyäthylenglycolester |
| Lösung II: | 5 | g | Na-Oleylmethyltaurid (95%ig) |
| | 25 | g | Äthylenglycol techn. |
| | 1,3 | g | Xanthangummi |
| | 443 | g | Wasser (dest.) |

Lösung II wurde vorgelegt und Lösung I mit Hilfe eines Homorex-Mixers eingerührt.

Nach Ende der Zugabe wurde 10 Minuten auf höchster Stufe weitergerührt, dann mit halbnormaler NaOH-Lösung auf pH = 7,25 eingestellt und nochmals kurz durchgerührt.

### Beispiel 2

| Lösung I: | 350 | g | MCPA-Äthylhexylester techn. |
| | 10 | g | Fettsäurepolyäthylenglycolester |
| Lösung II: | 2,5 | g | Palmkernfettsäure-methyltaurid-Natriumsalz (30%ige wässrige Lösung mit 7% NaCl-Gehalt) |
| | 10 | g | Äthylenglycol |
| | 126 | g | dest. Wasser |

Die Durchführung erfolgte wie in Beispiel 1 beschrieben. Es wurde ein pH-Wert von 7,55 eingestellt.

### Beispiel 3

| Lösung I: | 350 | g | 2,4-D-Äthylhexylester |
| | 10 | g | Fettsäurepolyäthylenglycolester |
| Lösung II: | 2,5 | g | Fettsäuremethyltaurid-Natriumsalz, (30%ige wässrige Lösung mit 7% NaCl-Gehalt, Fettsäure = Palmitin/Stearinsäure) |
| | 10 | g | Äthylenglycol |
| | 151 | g | dest. Wasser |

Die Durchführung erfolgte wie in Beispiel 1 beschrieben. Es wurde ein pH-Wert von 7,6 eingestellt.

### Beispiel 4

| Lösung I: | 350 | g | MCPA-Äthylhexylester techn. |
| | 10 | g | Fettsäurepolyäthylenglycolester |
| Lösung II: | 2,5 | g | Fettsäuretaurid-Natriumsalz, (mit anorganischen und organischen Salzen, Fettsäure = Laurin/Myristinsäure) |
| | 10 | g | Äthylenglycol |
| | 125 | g | dest. Wasser |

Die Durchführung erfolgte wie in Beispiel 1 beschrieben. Es wurde ein pH-Wert von 7,5 eingestellt.

### Beispiel 5

| Lösung I: | 350 | g | CMPP-Butylglycolester |
| | 10 | g | Fettsäurepolyäthylenglycolester |
| Lösung II: | 2,5 | g | Na-Oleylmethyltaurid (25%ige wässrige Lösung) |
| | 145 | g | dest. Wasser |

Die Durchführung erfolgte wie in Beispiel 1 beschrieben. Es wurde ein pH-Wert von 7,5 eingestellt.

### Beispiel 6

| Lösung I: | 350 g | | 2,4,5-T-Amylester |
| | 10 g | | Mischung aus Nonylphenyl-polyäthylenoxid, Polyoxyäthylen-polyoxypropylen-blockpolymerisat (MW 1800 bis 9000) und Alkylarylsulfonat |
| Lösung II: | 10 g | | Na-Oleylmethyltaurid (25%ige, wässrige Lösung) |
| | 10 g | | Äthylenglycol |
| | 150 g | | dest. Wasser |
| | 1 g | | Antischaum (Siliconemulsion) |

Die Durchführung erfolgte wie in Beispiel 1 beschrieben. Es wurde ein pH-Wert von 8,0 eingestellt.

### Beispiel 7

| Lösung I: | 350 g | | 2,4-D-Butylester |
| | 10 g | | Polyoxyäthylentriglycerid und Alkylarylsulfonat |
| Lösung II: | 10 g | | Na-Oleylmethyltaurid (25%ige wässrige Lösung) |
| | 10 g | | Äthylenglycol |
| | 165 g | | dest. Wasser |

Die Durchführung erfolgte wie in Beispiel 1 beschrieben. Es wurde ein pH-Wert von 7,0 eingestellt.

### Beispiel 8

| Lösung I: | 1200 | g | 2,4,5-T-Äthylhexylester techn. |
| | 30 | g | Fettsäurepolyglycolester |
| Lösung II: | 9 | g | Na-Oleylmethyltaurid (25%ige wässrige Lösung) |
| | 105 | g | Äthylenglycol |
| | 6 | g | Xanthangummi |
| | 1830 | g | dest. Wasser |
| | 2 | g | Antischaum (Siliconemulsion) |
| | 1,68 | g | NaOH |

In einem Vorversuch wurde ermittelt, dass zur Neutralisation der Formulierung 0,56 g/l NaOH benötigt werden, worauf die berechnete Menge NaOH (1,68 g) zur Lösung II gegeben wurde. Hierauf wurden die Lösungen I und II mittels Dosierpumpen einer Vorrichtung zugeleitet, die im wesentlichen aus einer Kreiselpumpe mit By-pass zur Produktrückführung und Druckhalteventil am Auslauf bestand. Die optimale Tropfenverteilung wurde bei einem Förderverhältnis von Dosierpumpe/Kreiselpumpe 1:15 bis 1:25 erhalten. Der pH-Wert war 7,8.

*Beispiel 9*

Lösung I:　429,5 g　MCPA-Äthylhexylester techn.

|  |  |  |
|---|---|---|
| | 226,6 g | 2,4,5-T-Äthylhexylester techn. |
| | 1,2 g | Fettalkoholpolyglycoläther |
| Lösung II: | 25 g | Na-Oleylmethyltaurid (25%ige wässrige Lösung) |
| | 25 g | Äthylenglycol |
| | 0,6 g | Xanthangummi |
| | 321 g | dest. Wasser |

In die vorgelegte Lösung II wurde Lösung I mittels Homorex® -Mixers eingerührt und das Gemisch mit halbnormaler NaOH-Lösung auf pH 8,30 eingestellt. Zur weiteren Homogenisierung wurde die Emulsion mit 90 bar über einen Homogenisierkopf gedrückt.

| Beispiel | Ausgangswerte | | | nach 4 Wochen Lagerung bei —10/+50°C | | | |
|---|---|---|---|---|---|---|---|
| | pH-Wert | Viskosität in mPa.s | Trübungswert | pH-Wert | Viskosität in mPa.s | Trübungswert | % überstehende Flüssigkeit |
| 1 | 7,25 | 1 300 | 85 | 7,20 | 1 280 | 85 | 1 |
| 2 | 7,55 | 750 | 84 | 7,00 | 740 | 86 | 0 |
| 3 | 7,60 | 275 | 86 | 6,95 | 280 | 80 | 2 |
| 4 | 7,50 | 1 750 | 88 | 7,30 | 1 580 | 83 | 0 |
| 5 | 7,50 | 425 | 82 | 6,80 | 400 | 79 | 5 |
| 6 | 8,00 | 600 | 86 | 7,35 | 550 | 78 | 9 |
| 7 | 7,00 | 350 | 81 | 6,50 | 320 | 73 | 8 |
| 8 | 7,80 | 1 200 | 79 | 7,00 | 1 175 | 71 | 0 |
| 9 | 8,30 | 2 450 | 88 | 7,55 | 2 200 | 88 | 9 |

**Patentansprüche**

1. Lagerstabile, konzentrierte Emulsion von einem oder mehreren herbizid wirkenden Phenoxyalkancarbonsäureestern auf wässriger Basis unter Verwendung eines öllöslichen Emulgators und eines wasserlöslichen Dispergators, dadurch gekennzeichnet, dass sie einen oder mehrere in den Estern lösliche Emulgatoren in einer Menge von 0,1 bis 5 Gew.-%, bezogen auf die fertige Emulsion mit einem HLB-Wert von 9 bis 16 aus der Gruppe der Fettsäurepolyäthylenglycolester, der Polyäthylenglycoläther von Fettalkoholen, von Glyceriden oder von Alkylphenolen, Polyoxyäthylen- und Polyoxypropylenblockpolymere, Mischungen dieser Polyäthylenglycolester, Polyäthylenglycoläther oder Polyäthylenglycol-polypropylenglycol-blockpolymeren mit Alkylarylsulfonaten sowie einen oder mehrere wasserlösliche Dispergatoren in einer Menge von 0,1 bis 3 Gew.-%, bezogen auf die fertige Emulsion, aus der Gruppe der Alkalisalze von gesättigten oder ein- oder mehrfach ungesättigten Fettsäuretauriden oder Fettsäurealkyltauriden gegebenenfalls zusammen mit üblichen Kälteschutz- und/oder üblichen Antischäummitteln enthält, wobei der Wirkstoffgehalt der konzentrierten Emulsion 30 bis 75 Gew.-%, die Viskosität 50 bis 3000 mPa.s, die Tropfengrösse 1 bis 5 µm und der pH-Wert 6 bis 9 beträgt.

2. Lagerstabile, konzentrierte Emulsion nach Anspruch 1, dadurch gekennzeichnet, dass als esterlösliche Emulgatoren Fettsäurepolyäthylenglycolester verwendet werden.

3. Lagerstabile, konzentrierte Emulsion nach den Ansprüchen 1 und 2, dadurch gekennzeichnet, dass als wasserlöslicher Dispergator Na-Oleylmethyltaurid verwendet wird.

4. Lagerstabile, konzentrierte Emulsion nach den Ansprüchen 1 bis 3, dadurch gekennzeichnet, dass als herbizid wirkende Phenoxyalkancarbonsäureester die Octylester der Phenoxyalkancarbonsäuren verwendet werden.

5. Lagerstabile, konzentrierte Emulsion nach den Ansprüchen 1 bis 4, dadurch gekennzeichnet, dass sie 1 bis 3 Gew.-% Emulgator enthält.

6. Lagerstabile, konzentrierte Emulsion nach den Ansprüchen 1 bis 5, dadurch gekennzeichnet, dass sie 0,2 bis 1 Gew.-% Dispergator enthält.

7. Lagerstabile, konzentrierte Emulsion nach den Ansprüchen 1 bis 6, dadurch gekennzeichnet, dass sie eine Viskosität von 500 bis 1500 mPa.s aufweist.

8. Lagerstabile, konzentrierte Emulsion nach den Ansprüchen 1 bis 7, dadurch gekennzeichnet, dass der pH-Wert 7 bis 8 beträgt.

9. Verfahren zur Herstellung einer lagerstabilen, konzentrierten Emulsion von herbizid wirkenden Phenoxyalkancarbonsäureestern unter Verwendung eines öllöslichen Emulgators und eines wasserlöslichen Dispergators nach Anspruch 1, dadurch gekennzeichnet, dass zur Herstellung eines Konzentrates auf wässriger Basis mit einem Wirkstoffgehalt von 30 bis 75% und einer Viskosität von 50 bis 3000 mPa.s aus einem oder mehreren Phenoxyalkancarbonsäureestern und mindestens einem in dem Ester löslichen ionischen oder nichtionischen Emulgator mit einem HLB-Wert von 9 bis 16 eine Lösung I bereitet wird, wobei auf 100 Gew.-Teile dieser Lösung I 0,15 bis 10 Gew.-Teile Emulgator oder Emulgatorgemisch zur Anwendung kommen, diese Lösung mit einer wässrigen Lösung II, die einen oder mehrere wasserlösliche Dispergatoren aus der Gruppe der Alkalisalze von gesättigten oder ein- oder mehrfach ungesättigten Fettsäuretauriden oder Fettsäurealkyltauriden und gegebenenfalls ein übliches Kälteschutz- und/oder ein übliches Antischäummittel enthält, wobei auf 100 Teile dieser wässrigen Lösung II 0,2 bis 10 Gew.-Teile Dispergator zur Anwendung kommen, gemischt und anschliessend bei Temperaturen von 15 bis 90°C bis zu einer Tropfengrösse von 1 bis 5 μm homogenisiert und vor oder nach der Homogenisierung nötigenfalls der pH-Wert der Mischung auf Werte zwischen 6 und 9 eingestellt wird, worauf das Homogenisat bis zu dem Wirkstoffgehalt von 30 bis 75 Gew.-% verdünnt wird.

**Claims**

1. Storage-stable, concentrated water-based emulsion of one or more herbicidally active phenoxyalkanecarboxylic acid esters, using an oil-soluble emulsifier and a water-soluble dispersant, characterised in that it contains one or more emulsifiers, soluble in the esters, in an amount of 0.1 to 5% by weight, based on the finished emulsion, the emulsifiers having an HLB of 9 to 16 and being chosen from the group of the fatty acid polyethylene glycol esters, the polyethylene glycol ethers of fatty alcohols, of glycerides or of alkylphenols, polyoxyethylene and polyoxypropylene block polymers, and mixtures of these polyethylene glycol esters, polyethylene glycol ethers or polyethylene glycol/polypropylene glycol block polymers with alkylarylsulphonates, as well as one or more water-soluble dispersants, in an amount of 0.1 to 3% by weight, based on the finished emulsion, chosen from the group of the alkali metal salts of saturated or monounsaturated or polyunsaturated fatty acid taurides or fatty acid alkyltaurides, optionally together with customary antifreeze and/or customary antifoam agents, the active substance content of the concentrated emulsion being 30 to 75% by weight, the viscosity being 50 to 3,000 mPa.s, the drop size being 1 to 5 μm and the pH value being 6 to 9.

2. Storage-stable, concentrated emulsion according to claim 1, characterised in that fatty acid polyethylene glycol esters are used as ester-soluble emulsifiers.

3. Storage-stable, concentrated emulsion according to claims 1 and 2, characterised in that Na oleyl-methyltauride is used as a water-soluble dispersant.

4. Storage-stable, concentrated emulsion according to claims 1 to 3, characterised in that the octyl esters of the phenoxyalkanecarboxylic acids are used as herbicidally active phenoxyalkanecarboxylic acid esters.

5. Storage-stable, concentrated emulsion according to claims 1 to 4, characterised in that it contains 1 to 3% by weight of emulsifier.

6. Storage-stable, concentrated emulsion according to claims 1 to 5, characterised in that it contain 0.2 to 1% by weight of dispersant.

7. Storage-stable, concentrated emulsion according to claims 1 to 6, characterised in that it has a viscosity of 500 to 1,500 mPa.s.

8. Storage-stable, concentrated emulsion according to claims 1 to 7, characterised in that the pH value is 7 to 8.

9. Process for the preparation of a storage-stable, concentrated emulsion of herbicidally active phenoxyalkanecarboxylic acid esters, using an oil-soluble emulsifier and a water-soluble dispersant, according to claim 1, characterised in that in order to prepare an aqueous concentrate having an active substance content of 30 to 75% and a viscosity of 50 to 3,000 mPa.s from one or more phenoxyalkanecarboxylic acid esters and at least one ionic or nonionic emulsifier which is soluble in the ester and has an HLB value of 9 to 16, a solution I is prepared, employing 0.15 to 10 parts by weight of emulsifier or emulsifier mixture per 100 parts by weight of this solution I, the said solution I is mixed with an aqueous solution II, which contains one or more water-soluble dispersants from the group of the alkali metal salts of saturated or monounsaturated or polyunsaturated fatty acid taurides or fatty acid alkyl-taurides and, optionally, a customary antifreeze and/or customary antifoam agent, with 0.2 to 10 parts by weight of dispersant being employed per 100 parts of this aqueous solution II, and thereafter the mixture of I and II is homogenised at temperatures of 15 to 90°C until the drop size is from 1 to 5 μm and, before or after the homogenisation, the pH value of the mixture is adjusted, where necessary, to values of between 6 and 9, whereupon the homogenised product is diluted to the active substance content of 30 to 75% by weight.

**Revendications**

1. Emulsion concentrée stable au magasinage d'un ou plusieurs esters d'acides phénoxyalcanecarboxyliques à effet herbicide à base aqueuse, avec utilisation d'un agent émulsifiant soluble dans l'huile et d'un agent dispersant soluble dans l'eau, caractérisée en ce qu'elle contient un ou plusieurs agents émulsifiants solubles dans les esters, selon une quantité allant de 0,1 à 5% en poids, sur la base de l'émulsion terminée, ayant un indice BHL de 9 à 16, du groupe des esters de polyéthylèneglycol d'acides gras, des éthers de polyéthylèneglycol d'alcools gras, de glycérides ou d'alcoylphénols, de polymères à blocs de polyoxyéthylène et de polyoxypropylène, de mélanges de ces esters de polyéthylèneglycol, éthers de polyéthylèneglycol ou polymères à blocs de polyéthylèneglycol-polypropylèneglycol avec des alcoylarylsulfonates, ainsi qu'un ou plusieurs agents dispersants solubles dans l'eau, selon une quantité de 0,1 à 3% en poids sur la base de l'émulsion terminée, du groupe des sels alcalins de taurides d'acides gras ou d'alcoyltaurides d'acides gras saturés ou à une ou plusieurs insaturations, le cas échéant conjointement à des agents usuels de protection contre le froid et/ou à des agents usuels anti-moussants, la teneur en substance active de l'émulsion concentrée représentant de 30 à 75% en poids, la viscosité de 50 à 3000 mPa.s, la grosseur de gouttes de 1 à 5 μm et le pH de 6 à 9.

2. Emulsion concentrée stable au magasinage suivant la revendication 1, caractérisée en ce qu'on utilise, comme émulsifiants solubles dans les esters, des esters de polyéthylèneglycol d'acides gras.

3. Emulsion concentrée stable au magasinage suivant les revendications 1 et 2, caractérisée en ce qu'on utilise, comme agent dispersant soluble dans l'eau, le sel de sodium d'oléylméthyltauride.

4. Emulsion concentrée stable au magasinage suivant l'une quelconque des revendications 1 à 3, caractérisée en ce qu'on utilise comme esters d'acides phénoxyalcanecarboxyliques à effet herbicide, l'ester octylique des acides phénoxyalcanecarboxyliques.

5. Emulsion concentrée stable au magasinage suivant l'une quelconque des revendications 1 à 4, caractérisée en ce qu'elle renferme de 1 à 3% en poids d'émulsifiant.

6. Emulsion concentrée stable au magasinage suivant les revendications 1 à 5, caractérisée en ce qu'elle contient 0,2 à 1% en poids d'agent dispersant.

7. Emulsion concentrée stable au magasinage suivant les revendications 1 à 6, caractérisée en ce qu'elle présente une viscosité de 500 à 1500 mPa.s.

8. Emulsion concentrée stable au magasinage suivant les revendications 1 à 7, caractérisée en ce que le pH a une valeur de 7 à 8.

9. Procédé de production d'une émulsion concentrée stable au magasinage d'esters phénoxyalcanecarboxyliques utilisant un agent émulsifiant liposoluble et un agent dispersant hydrosoluble suivant la revendication 1, caractérisée en ce que, pour la production d'un produit concentré à base aqueuse d'une teneur en substance active de 30 à 75% et d'une viscosité de 50 à 3000 mPa.s constitué d'un ou plusieurs esters phénoxyalcanecarboxyliques et d'au moins un agent émulsifiant ionique ou non-ionique soluble dans l'ester, d'un indice BHL de 9 à 16, on prépare une solution I dans laquelle, pour 100 parties en poids de cette solution I, on utilise 0,15 à 10 parties en poids d'agent émulsifiant ou de mélange d'agents émulsifiants, que l'on mélange cette solution avec une solution aqueuse II qui contient un ou plusieurs agents dispersants hydrosolubles du groupe des sels alcalins de taurides d'acides gras ou d'alkyltaurides d'acides gras saturés ou mono ou polyinsaturés et, le cas échéant, un agent antigel usuel et/ou un agent antimousse usuel, 100 parties de cette solution II renfermant de 0,2 à 10 parties en poids d'agent dispersant, et qu'ensuite on homogénéise à une température de 15 à 90°C jusqu'à une dimension de gouttes de 1 à 5 μm et qu'on règle, avant ou après l'homogénéisation, le pH du mélange à une valeur comprise entre 6 et 9, le produit homogénéisé étant ensuite dilué jusqu'à une teneur en substance active de 30 à 75% en poids.